# EUROPÄISCHE PATENTSCHRIFT

(11) **EP 0 743 908 B1**
(45) Veröffentlichungstag und Bekanntmachung des Hinweises auf die Patenterteilung: **01.03.2000**
(21) Anmeldenummer: 95940186.0
(22) Anmeldetag: 18.11.1995
(51) Int. Cl.: B60T 13/57

(54) **UNTERDRUCKBREMSKRAFTVERSTÄRKER FÜR KRAFTFAHRZEUGE**
VACUUM BRAKE SERVO FOR MOTOR VEHICLES
SERVOFREIN A DEPRESSION POUR VEHICULES A MOTEUR

(30) Priorität: 18.11.1994 DE 4441149
(43) Veröffentlichungstag der Anmeldung: 27.11.1996
(73) Patentinhaber: Continental Teves AG & Co. oHG, 60488 Frankfurt (DE)
(72) Erfinder: WAGNER, Wilfried, D-35625 Hüttenberg (DE)
(86) Internationale Anmeldenummer: EP9504507
(87) Internationale Veröffentlichungsnummer: WO9615930

(56) Entgegenhaltungen:
- DE-A- 4 021 304
- DE-A- 4 227 879

## Beschreibung

Die Erfindung betrifft einen Unterdruckbremskraftverstärker für Kraftfahrzeuge mit einem Verstärkergehäuse, dessen Innenraum durch eine bewegliche Wand in eine Unterdruckkammer und eine Arbeitskammer unterteilt ist, sowie einem eine auf die bewegliche Wand einwirkende Druckdifferenz steuernden, in einem die bewegliche Wand tragenden Steuergehäuse angeordneten Steuerventil, das aus zwei konzentrisch zueinander ausgebildeten Dichtsitzen sowie einem ringförmigen Ventilkörper besteht, der in einem Führungsteil geführt ist und im Steuergehäuse einen pneumatischen Raum begrenzt, der mit dem in der Arbeitskammer herrschenden pneumatischen Druck beaufschlagbar ist und dessen radial innenliegende Begrenzung durch das im Steuergehäuse abgedichtet angeordnete Führungsteil gebildet ist.

Ein derartiger Unterdruckbremskraftverstärker ist z.B. aus der DE-OS 42 27 879 A1 bekannt. Der mittels einer Ventilfeder in Richtung auf die Dichtsitze zu vorgespannte Ventilkörper des vorbekannten Bremskraftverstärkers weist im Bereich seiner Dichtfläche Durchlässe auf, die von einem mit der Arbeitskammer in Verbindung stehenden Ringraum ausgehend, im pneumatichen Raum auf der den Dichtsitzen abgewandten Seite des Ventilkörpers münden, so daß zwischen diesem Raum und der Arbeitskammer ein ständiger Druckausgleich stattfindet. Am Ventilkörper sind zwei pneumatische Wirkflächen zu erkennen. Die erste Wirk- bzw. Ringfläche wird durch den radial innenliegenden Dichtsitz (Atmosphärendichtsitz) des Steuerventils sowie eine mit dem den pneumatischen Raum begrenzenden Führungsteil zusammenwirkende radial innenliegende Dichtlippe des Ventilkörpers begrenzt, so daß sie in der Lösestellung der Wirkung einer pneumatischen Druckdifferenz zwischen dem Atmosphärendruck und dem im pneumatischen Raum herrschenden Unterdruck ausgesetzt ist. Dadurch entsteht eine Kraftkomponente, die der von der Ventilfeder aufgebrachten Kraft entgegengerichtet ist und die bei der Betätigung mit steigendem Belüftungssgrad des pneumatischen Raumes sinkt, bis sie im Aussteuerpunkt des Bremskraftverstärkers bzw. bei voller Belüftung der Arbeitskammer zu Null wird, so daß die erste Ringfläche druckausgeglichen ist.

Die zweite Wirkbzw. Ringfläche wird durch den radial außenliegenden Dichtsitz (Unterdruckdichtsitz) des Steuerventils sowie eine mit der den pneumatischen Raum begrenzenden Innenwand des Steuergehäuses zusammenwirkende, radial außenliegende Dichtlippe des Ventilkörpers begrenzt, so daß sie in der Lösestellung des Bremskraftverstärkers druckausgeglichen ist und bei der Betätigung der Wirkung eines pneumatischen Differenzdruckes ausgesetzt ist. Dadurch entsteht eine unterdruckabhängige Kraftkomponente, die die Wirkung der vorhin erwähnten Ventilfeder unterstützt.

Weniger vorteilhaft ist jedoch bei den vorbekannten Unterdruckbremskraftverstärker anzusehen, daß Konstruktionsänderungen im Steuergehäuse erforderlich sind, um die im Bereich höherer Betätigungskräfte entstehende, unterdruckabhängige Dichtkraftkomponente zu minimieren.

Es ist daher Aufgabe der vorliegenden Erfindung, Maßnahmen vorzuschlagen, die ein Minimieren der vorhin erwähnten Dichtkraftkomponente ohne Konstruktionsänderungen des Steuergehäuses ermöglichen.

Diese Aufgabe wird erfindungsgemäß dadurch gelöst, daß die radial außenliegende Begrenzung des pneumatischen Raumes durch das Führungsteil gebildet ist.

Zur Konkretisierung des Erfindungsgedankens sieht eine vorteilhafte Weiterbildung der Erfindung, bei der der Ventilkörper eine radial außensowie eine radial innenliegende Dichtlippe aufweist und die radial innenliegende Dichtlippe mit einem innenliegenden rohrförmigen Bereich des Führungsteiles zusammenwirkt, vor, daß die radial außenliegende Dichtlippe mit einem radial außenliegenden, zylindrisch ausgebildeten Bereich des Führungsteiles zusammenwirkt, der radial am Steuergehäuse anliegt.

Eine weitere vorteilhafte Ausführungsvariante der Erfindung, bei der der Ventilkörper eine durch die radial innenliegende Dichtlippe und den radial innenliegenden Dichtsitz begrenzte erste Ringfläche sowie eine durch die radial außenliegende Dichtlippe und den radialen außenliegenden Dichtsitz begrenzte zweite Ringfläche aufweist, zeichnet sich dadurch aus, daß beide Ringflächen gleich groß ausgelegt sind. Durch diese Maßnahme wird erreicht, daß der erfindungsgemäße Unterdruckbremskraftverstärker ein druckausgeglichenes Verhalten insbesondere in seinem mittleren Funktionsbereich aufweist, da sich die entgegengesetzt wirkenden Kräfte aufheben.

Eine andere vorteilhafte Ausgestaltung des Erfindungsgegenstandes sieht vor, daß die erste Ringfläche größer als die zweite Ringfläche ausgebildet ist. Diese Ausführung ist insbesondere bei der Realisierung von proportional steuerbaren Steuerventilen von Vorteil, die z.B. in fremd- bzw. elektromechanisch betätigbaren Bremskraftverstärkern zum Einsatz kommen.

Dabei ist es vorteilhaft, wenn das Führungsteil aus Kunststoff oder Metall besteht.

Eine Vereinfachung der Montage der Steuergruppe, in der die Abdichtung des Führungsteiles gegenüber dem Steuergehäuse mittels eines Dichtringes erfolgt, ergibt sich bei einer weiteren Ausführungsvariante, bei der der Dichtring in einer im Führungsteil ausgebildeten Radialnut angeordnet ist.

Eine Verkürzung der axialen Baulänge, insbesondere der Steuergruppe des erfindungsgemäßen Brmeskraftverstärkers, bei dem im Lufteintrittsbereich des Steuergehäuses ein Luftfilter sowie eine den radial innenliegenden Dichtsitz (Atmosphärendichtsitz) entgegen der Betätigungsrichtung vorspannende Rückstellfeder angeordnet sind, wird schließlich dadurch erreicht, daß der Luftfilter am Führungsteil axial anliegt und daß die Rückstellfeder zylindrisch ausgebildet und radial außenliegend koaxial zum Luftfilter angeordnet ist.

Die Erfindung wird im nachfolgenden Text an einem Ausführungsbeispiel im Zusammenhang mit der beigefügten Zeichnung näher erläutert. In der Zeichnung zeigen:
- Fig. 1: einen Unterdruckbremskraftverstärker nach der Erfindung im Längsschnitt teilweise weggebrochen, und
- Fig. 2: die Steuergruppe des Unterdruckbremskraftverstärkers nach Fig. 1 im vergrößerten Maßstab, stark vereinfacht.

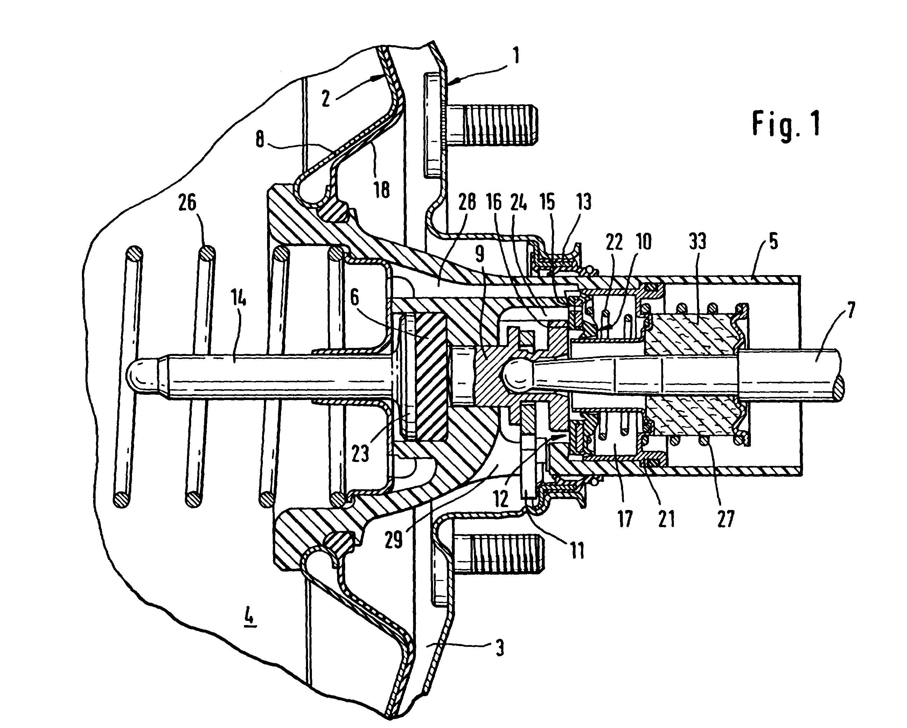

Das lediglich schematisch angedeutete Verstärkergehäuse 1 des in Fig. 1 gezeigten erfindungsgemäßen Unterdruckbremskraftverstärkers ist durch eine axial bewegliche Wand 2 in eine Arbeitskammer 3 und eine Unterdruckkammer 4 unterteilt. Die axial bewegliche Wand 2 besteht aus einem aus Blech tiefgezogenen Membranteller 8 und einer daran anliegenden flexiblen Membran 18, die nicht näher dargestellt zwischen dem äußeren Umfang des Membrantellers 8 und dem Verstärkergehäuse 1 eine Rollmembran als Abdichtung bildet.

Ein durch eine Betätigungsstange 7 betätigbares Steuerventil 12 ist in einem im Verstärkergehäuse 1 abgedichtet geführten, die bewegliche Wand 2 tragenden Steuergehäuse 5 untergebracht und besteht aus einem am Steuergehäuse 5 ausgebildeten ersten Dichtsitz 15, einem an einem mit der Betätigungsstange 7 verbundenen Ventilkolben 9 ausgebildeten zweiten Dichtsitz 16 sowie einem mit beiden Dichtsitzen 15,16 zusammenwirkenden, in einem im Steuergehäuse 5 abgedichtet angeordneten Führungsteil 21 geführten ringförmigen Ventilkörper 10, der mittels einer sich am Führungsteil 21 abstützenden Ventilfeder 22 gegen die Dichtsitze 15,16 gedrückt wird. Die Arbeitskammer 3 ist mit der Unterdruckkammer 4 über seitlich im Steuergehäuse 5 verlaufende Kanäle 28 verbindbar.

Die Bremskraft wird über eine stirnseitig am Steuergehäuse 5 anliegende gummielastische Reaktionsscheibe 6 sowie eine einen Kopfflansch 23 aufweisende Druckstange 14 auf einen Betätigungskolben eines nicht dargestellten Hauptzylinders der Bremsanlage übertragen, der am unterdruckseitigen Ende des Unterdruckbremskraftverstärkers angebracht ist. Die an der Betätigungsstange 7 eingeleitete Eingangskraft wird auf die Reaktionsscheibe 6 mittels des Ventilkolbens 9 übertragen.

Eine in der Zeichnung schematisch dargestellte Rückstellfeder 26, die sich an der unterdruckseitigen Stirnwand des Verstärkergehäuses 1 an einem nicht gezeigten Flansch abstützt, hält die bewegliche Wand 2 in der gezeigten Ausgangsstellung. Außerdem ist eine Kolbenstangenrückhol-feder 27 vorgesehen, die einen am Führungsteil 21 axial anliegenden Luftfilter 33 radial umgreifend, zwischen der Betätigungsstange 7 und dem Führungsteil 21 eingespannt ist und deren Kraft für eine Vorspannung des Ventilkolbens 9 bzw. seines Dichtsitzes 16 gegenüber dem Ventilkörper 10 sorgt.

Um die Arbeitskammer 3 bei der Betätigung des Steuerventils 12 mit der Atmosphäre verbinden zu können, ist schließlich im Steuergehäuse 5 ein annähernd radial verlaufender Kanal 29 ausgebildet. Die Rückkehrbewegung des Ventilkolbens 9 am Ende eines Bremsvorganges wird dabei durch ein Querglied 11 begrenzt, das in der in der Zeichnung gezeigten Lösestellung des Unterdruckbremskraftverstärkers an einem das Steuergehäuse 5 im Verstärkergehäuse 1 abgedichtet führenden Gleitdichtring 13 anliegt.

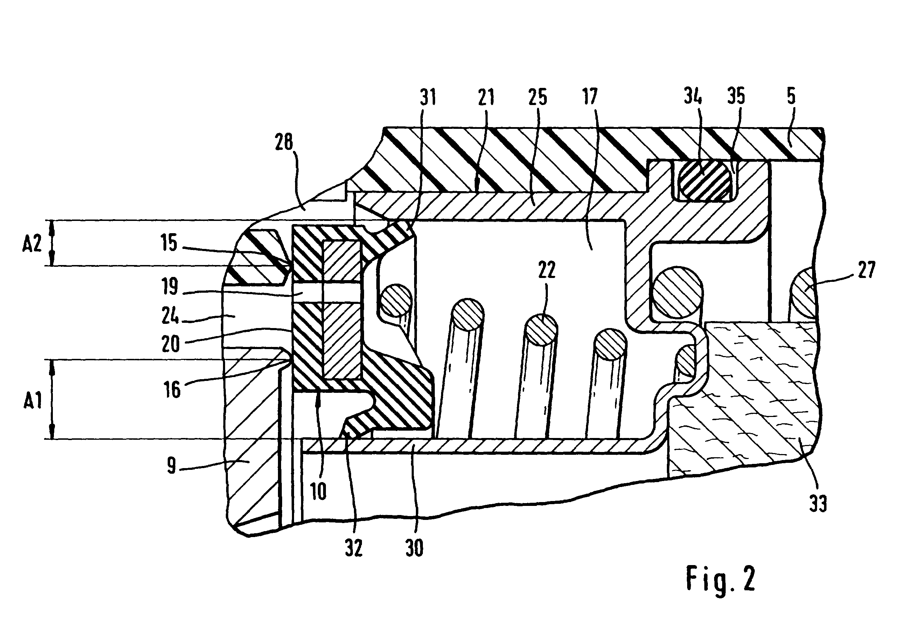

Wie der Zeichnung weiter zu entnehmen ist, begrenzt der Ventilkörper 10 im Führungsteil 21 einen pneumatischen Raum 17, der mittels im Ventilkörper 10 ausgebildeter Durchlässe 19 (Fig. 2) mit einem durch die Dichtsitze 15,16 begrenzten Ringraum 24 in Verbindung steht, in dem der oben erwähnte pneumatische Kanal 29 mündet, so daß der auf der der Dichtfläche 20 abgewandten Seite des Ventilkörpers 10 ausgebildete pneumatische Raum 17 ständig mit der Arbeitskammer 3 in Verbindung steht und am Ventilkörper 10 ein Druckausgleich stattfindet.

Wie insbesondere Fig. 2 zeigt, weist der Ventilkörper 10 eine radial außenliegende, an einem radial außenliegenden, zylindrisch gestalteten Bereich 25 des Führungsteiles 21 dichtend anliegende erste Dichtlippe 31, sowie eine radial innenliegende zweite Dichtlippe 32 auf, die mit einem rohrförmig gestalteten, radial innenliegenden Bereich 30 des Führungsteiles 21 zusammenwirkt. Für eine wirksame Abdichtung des Führungsteiles 21 gegenüber dem Steuergehäuse 5 sorgt ein Dichtring 34, der in einer umlaufenden Radialnut 35 des Führungsteiles 21 angeordnet ist.

In der in der Zeichnung gezeigten Lösestellung herrscht in den Unterdruckkanälen 28, dem Ringraum 24 sowie dem pneumatischen Druckausgleichsraum 17 annähernd der gleiche Druck bzw. der in der Unterdruckkammer 4 herrschende Unterdruck. Die Ventilfeder 22 erbringt die benötigte Anpreßkraft des Ventilkörpers 10 an die Dichtsitze 15,16. Da in dem durch den Ventilkolben 9 sowie den radial innenliegenden Bereich des Ventilkörpers 10 begrenzten Raum Atmosphärendruck herrscht, wirkt auf die erste Ringfläche A1 des Ventilkörpers 10 zwischen dem zweiten (Atmosphären-) Dichtsitz 16 und der radial innenliegenden Dichtlippe 32 eine pneumatische Druckdifferenz. Dadurch entsteht eine vom Unterdruckwert im Druckausgleichsraum 17 abhängige Kraft-komponente, die der von der Ventilfeder 22 aufgebrachten Dichtkraft entgegenwirkt.

Bei der Betätigung, bei der der zweite Dichtsitz 16 vom Ventilkörper 10 abhebt und die Arbeitskammer 3 belüftet wird, erfolgt gleichzeitig eine Belüftung des Druckausgleichsraums 17, so daß auf die zweite Ringfläche A2 des Ventilkörpers 10 zwischen dem ersten (Unterdruck-)Dichtsitz 15 und der radial außenliegenden Dichtlippe 31 eine pneumatische Druckdifferenz wirkt. Dadurch entsteht eine in Richtung auf die Dichtsitze 15,16 gerichtete Kraftkompo-nente, die die Wirkung der Ventilfeder 22 unterstützt. Mit steigender Belüftung des Druckausgleichsraums 17 sinkt die auf die erste Ringfläche A1 wirkende Kraftkomponente, bis sie im Aussteuerpunkt des Bremskraftverstärkers bzw. bei dessen voller Belüftung zu Null wird.

Aus der obigen Beschreibung erhellt, daß durch geeignete Abstimmung der beiden Ringflächen A1 und A2 das Verhalten des erfindungsgemäßen Unterdruckbremskraftverstärkers beeinflußt werden kann. Wenn beispielsweise beide Ring-flächen A1 und A2 gleich groß ausgelegt werden, wird ein druckausgeglichenes Verhalten des Bremskraftverstärkers im Bereich der mittleren Betätigungskräfte erreicht, indem sich beide Kraftkomponenten aufheben. Wenn dagegen die radial außenliegende Ringfläche A2 größer als die erste Ringfläche A1 gewählt wird, kann eine proportionale Steuerung des Steuerventils 12 realisiert werden, die insbesondere bei fremd- bzw. elektromagnetisch betätigbaren Bremskraftverstärkern sinnvoll ist.

### Bezugszeichenliste:

- 1: Verstärkergehäuse
- 2: bewegliche Wand
- 3: Arbeitskammer
- 4: Unterdruckkammer
- 5: Steuergehäuse
- 6: Reaktionsscheibe
- 7: Betätigungsstange
- 8: Membranteller
- 9: Ventilkolben
- 10: Ventilkörper
- 11: Querglied
- 12: Steuerventil
- 13: Gleitdichtring
- 14: Druckstange
- 15: Dichtsitz
- 16: Dichtsitz
- 17: Raum
- 18: Rollmembran
- 19: Durchlaß
- 20: Dichtfläche
- 21: Führungsteil
- 22: Ventilfeder
- 23: Kopfflansch
- 24: Ringraum
- 25: Bereich
- 26: Rückstellfeder
- 27: Kolbenstangenrückholfeder
- 28: Kanal
- 29: Kanal
- 30: Bereich
- 31: Dichtlippe
- 32: Dichtlippe
- 33: Luftfilter
- 34: Dichtring
- 35: Ringnut

## Patentansprüche

1. Unterdruckbremskraftverstärker für Kraftfahrzeuge, mit einem Verstärkergehäuse (1), dessen Innenraum durch eine bewegliche Wand (2) in eine Unterdruckkammer (4) und eine Arbeitskammer (3) unterteilt ist, sowie einem eine auf die bewegliche Wand (2) einwirkende Druckdifferenz steuernden, in einem die bewegliche Wand (2) tragenden Steuergehäuse (5) angeordneten Steuerventil (12), das aus zwei konzentrisch zueinander ausgebildeten Dichtsitzen (15,16), sowie einem ringförmigen Ventilkörper (10) besteht, der in einem Führungsteil (21) geführt ist, und im Steuergehäuse (5) einen pneumatischen Ringraum (17) begrenzt, der mit dem in der Arbeitskammer (3) herrschenden pneumatischen Druck beaufschlagbar ist, und dessen radial innenliegende Begrenzung durch das im Steuergehäuse (5) abgedichtet angeordnete Führungsteil (21) gebildet ist, dadurch **gekennzeichnet**, daß die radial außenliegende Begrenzung des pneumatischen Raumes (17) durch das Führungsteil (21) gebildet ist.

2. Unterdruckbremskraftverstärker nach Anspruch 1, wobei der Ventilkörper (10) eine radial außenliegende sowie eine radial innenliegende Dichtlippe (31,32) aufweist, und die radial innenliegende Dichtlippe (31) mit einem radial innenliegenden rohrförmigen Bereich des Führungsteils (21) zusammenwirkt, dadurch **gekennzeichnet**, daß die radial außenliegende Dichtlippe (31) mit einem radial außenliegenden zylindrisch ausgebildeten Bereich (25) des Führungsteiles (21) zusammenwirkt, der radial am Steuergehäuse (5) anliegt.

3. Unterdruckbremskraftverstärker nach Anspruch 1 oder 2, wobei der Ventilkörper (10) eine durch die radial innenliegende Dichtlippe (32) und den radial innenliegenden Dichtsitz (16) begrenzte erste Ringfläche (A1) sowie eine durch die radiale außenliegende Dichtlippe (31) und den radial außenliegenden Dichtsitz (15) begrenzte zweite Ringfläche (A2) aufweist, dadurch **gekennzeichnet**, daß beide Ringflächen (A1, A2) gleich groß ausgelegt sind.

4. Unterdruckbremskraftverstärker nach Anspruch 1 oder 2, wobei der Ventilkörper (10) eine durch die radial innenliegende Dichtlippe (32) und den radial innenliegenden Dichtsitz (16) begrenzte erste Ringfläche (A1) sowie eine durch die radial außenliegende Dichtlippe (31) und den radial außenliegenden Dichtsitz (15) begrenzte zweite Ringfläche (A2) aufweist, dadurch **gekennzeichnet**, daß die erste Ringfläche (A1) größer als die zweite Ringfläche (A2) ausgebildet ist.

5. Unterdruckbremskraftverstärker nach einem der vorhergehenden Ansprüche, dadurch **gekennzeichnet**, daß das Führungsteil (21) aus Kunststoff besteht.

6. Unterdruckbremskraftverstärker nach einem der vorhergehenden Ansprüche, dadurch **gekennzeichnet**, daß das Führungsteil (21) aus Metall besteht.

7. Unterdruckbremskraftverstärker nach einem der vorhergehenden Ansprüche, wobei die Abdichtung des Führungsteiles (21) gegenüber dem Steuergehäuse (5) mittels eines Dichtringes (34) erfolgt, dadurch **gekennzeichnet**, daß der Dichtring (34) in einer im Führungsteil ausgebildeten Radialnut (35) angeordnet ist.

8. Unterdruckbremskraftverstärker nach einem der vorhergehenden Ansprüche, wobei im Lufteintrittsbereich des Steuergehäuse (5) ein Luftfilter (33) sowie eine den radial innenliegenden Dichtsitz (16, Atmosphärendichtsitz) entgegen der Betätigungsrichtung vorspannende Rückstellfeder (27) angeordnet sind, dadurch **gekennzeichnet**, daß der Luftfilter (33) am Führungsteil (21) axial anliegt und daß die Rückstellfeder (27) zylindrisch ausgebildet und radial außenliegend koaxial zum Luftfilter (33) angeordnet ist.

## Claims

1. Vacuum brake booster for motor vehicles, comprising a booster housing (1), the interior of which is divided into a vacuum chamber (4) and a work chamber (3) by means of a movable wall (2), and a control valve (12) that controls the differential pressure acting upon the movable wall and is arranged in a valve gear casing (5) that carries the movable wall (2), wherein the control valve consists of two sealing seats (15, 16) that are arranged concentrically with respect to one another as well as an annular valve body (10) that is guided in a guide part (21) and limits a pneumatic annular chamber (17) in the valve gear casing which can be acted upon by the pneumatic pressure that prevails in the work chamber, and wherein the guide part (21) that is arranged in the valve gear casing (5) in a sealed fashion forms the radially inner limit of the aforementioned pneumatic chamber,
**characterized** in that the radially outer limit of the pneumatic chamber (17) is formed by the guide part (21).

2. Vacuum brake booster as claimed in claim 1, wherein the valve body comprises a radially outer sealing lip as well as a radially inner sealing lip (31, 32), and wherein the radially inner sealing lip (31) cooperates with a tubular, radially inner region of the guide part (21),
**characterized** in that the radially outer sealing lip (31) cooperates with a cylindrical, radially outer region (25) of the guide part (21) which radially adjoins the valve gear casing (5).

3. Vacuum brake booster as claimed in claim 1 or claim 2, wherein the valve body (10) comprises a first annular surface (A1) that is limited by the radially inner sealing lip (32) and the radially inner sealing seat (16) as well as a second annular surface (A2) that is limited by the radially outer sealing lip (31) and the radially outer sealing seat (15),
**characterized** in that both annular surfaces (A1,A2) have the same size.

4. Vacuum brake booster as claimed in claim 1 or claim 2, wherein the valve body (10) comprises a first annular surface (A1) that is limited by the radially inner sealing lip (32) and the radially inner sealing seat (16) as well as a second annular surface (A2) that is limited by the radially outer sealing lip (31) and the radially outer sealing seat (15),
**characterized** in that the first annular surface (A1) is larger than the second annular surface (A2).

5. Vacuum brake booster as claimed in any one of the preceding claims,
**characterized** in that the guide part (21) is made of plastic.

6. Vacuum brake booster as claimed in any one of the preceding claims,
**characterized** in that the guide part (21) is made of metal.

7. Vacuum brake booster as claimed in any one of the preceding claims, wherein the guide part (21) is sealed relative to the valve gear casing (5) by means of a ring seal (34),
**characterized** in that the ring seal (34) is arranged in a radial groove (35) in the guide part.

8. Vacuum brake booster as claimed in any one of the preceding claims, wherein an air filter (33), as well as a readjusting spring that prestresses the radially inner sealing seat (16) (atmospheric sealing seat) opposite the actuating direction, is arranged within the air intake region of the valve gear casing (5),
**characterized** in that the air filter (33) axially adjoins the guide part (21), and in that the readjusting spring (27) has a cylindrical design and is arranged radially outside as well as coaxial to the air filter (33).

## Revendications

1. Amplificateur de force de freinage à dépression pour véhicule automobile, comprenant un boîtier d'amplificateur (1), dont la cavité est divisée par une paroi mobile (2) en une chambre à dépression (4) et une chambre de travail (3), et une valve de commande (12), qui commande une différence de pression s'exerçant sur la paroi mobile et qui est disposée dans un boîtier de commande (5) portant la paroi mobile (2) et est constituée de deux sièges d'étanchéité (15, 16), réalisés d'une manière concentrique l'un par rapport à l'autre, et d'un obturateur (10) annulaire qui est guidé dans une pièce de guidage (21) et délimite, dans le boîtier de commande, un espace pneumatique annulaire (17) qui peut être soumis à la pression pneumatique régnant dans la chambre de travail et dont la limite radialement intérieure est formée par la pièce de guidage (21) disposée d'une manière étanche dans le boîtier de commande (5), caractérisé en ce que la limite radialement extérieure de l'espace pneumatique (17) est formée par la pièce de guidage (21).

2. Amplificateur de force de freinage à dépression suivant la revendication 1, dans lequel l'obturateur comporte une lèvre d'étanchéité radialement extérieure et une lèvre d'étanchéité radialement intérieure (31, 32) et la lèvre d'étanchéité radialement intérieure (31) coopère avec une zone tubulaire radialement intérieure de la pièce de guidage (21), caractérisé en ce que la lèvre d'étanchéité radialement extérieure (31) coopère avec une zone (25) cylindrique radialement extérieure de la pièce de guidage (21) qui prend appui radialement sur le boîtier de commande (5).

3. Amplificateur de force de freinage suivant la revendication 1 ou 2, dans lequel l'obturateur (10) comporte une première surface annulaire (A1), délimitée par la lèvre d'étanchéité radialement intérieure (32) et par le siège d'étanchéité radialement intérieur (16), et une seconde surface annulaire (A2) délimitée par la lèvre d'étanchéité radialement extérieure (31) et le siège d'étanchéité radialement extérieur (15), caractérisé en ce que les deux surfaces annulaires (A1, A2) sont de la même dimension.

4. Amplificateur de force de freinage suivant la revendication 1 ou 2, dans lequel l'obturateur (10) comporte une première surface annulaire (A1), délimitée par la lèvre d'étanchéité radialement intérieure (32) et par le siège d'étanchéité radialement intérieur (16), et une seconde surface annulaire (A2) délimitée par la lèvre d'étanchéité radialement extérieure (31) et le siège d'étanchéité radialement extérieur (15), caractérisé en ce que la première surface annulaire (A1) est plus grande que la seconde surface annulaire (A2).

5. Amplificateur de force de freinage à dépression suivant l'une des revendications précédentes, caractérisé en ce que la pièce de guidage (21) est en matière plastique.

6. Amplificateur de force de freinage à dépression suivant l'une des revendications précédentes, caractérisé en ce que la pièce de guidage (21) est en métal.

7. Amplificateur de force de freinage à dépression suivant l'une des revendications précédentes, dans lequel l'étanchéité de la pièce de guidage (21) par rapport au boîtier de commande (5) s'effectue au moyen d'une bague d'étanchéité (34), caractérisé en ce que la bague d'étanchéité (34) est disposée dans une gorge radiale (35) ménagée dans la pièce de guidage.

8. Amplificateur de force de freinage à dépression suivant l'une des revendications précédentes, dans lequel il est prévu, disposés dans la zone d'entrée d'air du boîtier de commande (5), un filtre à air (33) et un ressort de rappel qui soumet le siège d'étanchéité radialement intérieur (16) (siège d'étanchéité atmosphérique) à une précontrainte à l'encontre du sens d'actionnement, caractérisé en ce que le filtre à air (33) prend appui axialement sur la pièce de guidage (21) et que le ressort de rappel (27) est cylindrique et est disposé coaxialemant au filtre à air (33) en étant disposé radialement à l'extérieur.
